Europäisches Patentamt

(19) European Patent Office

Office européen des brevets

(11) Publication number: **0 155 784**

**A2**

(12) # EUROPEAN PATENT APPLICATION

(21) Application number: **85301345.6**

(22) Date of filing: **27.02.85**

(51) Int. Cl.⁴: **B 60 N 1/12**

(30) Priority: **28.02.84 GB 8405121**

(43) Date of publication of application:
**25.09.85 Bulletin 85/39**

(84) Designated Contracting States:
**DE GB NL SE**

(71) Applicant: **ASE (UK) LIMITED**
**Norfolk Street**
**Carlisle Cumbria CA2 5HX(GB)**

(72) Inventor: **Anderson, Alexander Barrie**
**Westwoodside**
**Wigton Cumbria CA7 0LW(GB)**

(74) Representative: **Jones, Ian et al,**
**POLLAK MERCER & TENCH High Holborn House 52-54**
**High Holborn**
**London WC1V 6RY(GB)**

(54) **Vehicle seating equipment for children.**

(57) Seating equipment for child use on a vehicle seat comprises two generally channel shaped portions (10;110 & 20;120) which can be used individually or in stacked relationship to function as booster cushions or which can be assembled together to form a child's seat, one portion then providing a backrest. The shoulder belt of an adult seat belt system is deflected to suit an occupant of the seating equipment by a projection (24) on the portion providing the backrest or by a connector (142), which may clampingly engage the belt, carried on a strap (140) extending from one or other of the portions.

FIG.1

VEHICLE SEATING EQUIPMENT FOR CHILDREN

DESCRIPTION

The invention relates to seating equipment for children with particular reference to the use of such equipment in vehicles, primarily road vehicles.

To enable babies and very young children to be carried safely and comfortably, for example in the rear seats of passenger cars, there have been provided child's seats, that is, seating equipment providing besides a seating surface also a backrest surface and preferably also side walls providing lateral restraint for the occupant. Such child's seats normally include harnesses for retaining the occupants within them and may be provided with attachments whereby they are held in place by means of vehicle anchorages normally provided for conventional seat belt systems.

Such child's seats are inappropriate for older children, who however until they reach adult size are at a disadvantage in that they cannot comfortably see through the vehicle windows. Also, they cannot satisfactorily use seat belt systems designed for adults without adaptation. For such children, a so-called "booster cushion", that is, seating equipment providing a seating surface by which the user can be raised above the level of a seat on which the cushion is placed, usually without any substantial backrest, and with or without raised side portions.

The present invention provides seating equipment for use with a vehicle seat as a child's seat and from which a backrest portion can be removed, the seat portion remaining being usable as a booster cushion. Preferably, the backrest portion can be arranged for use independently as a booster cushion, and may then provide a seating surface at a different level from that provided by the seat portion. The portions can advantageously be arranged to stack one upon the other to provide booster cushions at further different levels.

The invention also provides seating equipment for use in a vehicle, the equipment comprising two portions arranged to be engaged together to provide either a child's seat or a booster cushion, at least one of the portions being preferably capable of functioning independently as a booster cushion.

The invention also provides child's seating equipment for use with a vehicle seat, the equipment comprising a booster cushion with which a second portion of the equipment can be stacked to provide a seating surface at a different height. The second portion can be a second booster cushion which can be stacked above or below the first cushion, and/or the cushions can be capable of assembly together to make a child's seat.

However employed, the seating equipment of the invention is preferably arranged to be held securely on a road vehicle seat by the lap belt of an adult safety belt associated with the seat.

Such adult seat belt systems are most often of the 3-point type which includes not only a lap belt but a shoulder or diagonal belt extending in use diagonally across the user's chest. In spite of the raised position of a child using seating equipment of the invention, the position from which the shoulder belt downwardly extends will be too high for the child, with consequential discomfort and the danger that the child will slip under the belt in the event of a sharp deceleration.

Accordingly, the seating equipment can include a connector to the shoulder belt at the free end of a strap secured to the equipment at a position such that the connector can be positioned just above the child's shoulder, so that the belt effectively descends from this position. The connection to the shoulder belt can be a free or sliding one but when the seat belt system incorporates a spring-loaded retractor, the shoulder belt is advantageously clamped by the connector so that the tension in the belt is not applied to the user's chest.

The invention accordingly provides a child's seating equipment having extending therefrom a strap carrying a connector for clamping engagement with a shoulder belt to reposition the belt, that is, to adjust the effective position from which it extends downwardly, in a manner appropriate to the size of the child.

The invention also provides vehicle seating equipment in the form of a child's seat having side walls adjacent the backrest surface, the side walls being shaped so as to engage a shoulder belt to position it suitably for the occupant.

The present invention accordingly provides seating equipment of extreme versatility, capable of providing safe and convenient seating surface for children of all sizes.

By way of illustration, child's seating equipment embodying the invention is described below with reference to the accompanying drawing, in which:

Figure 1 is a perspective view of a first child's seating equipment in the form of a child's seat with seat and back portions thereof shown slightly spaced apart;

Figure 2 is a like view of the seat portion of the seating equipment of Figure 1;

Figure 3 is a like view of the back portion of the seating equipment shown in Figure 1, used as a booster cushion;

Figure 4 is a like view of the two portions of the seating equipment of Figure 1 in a relationship different from that shown in Figure 1;

Figure 5 is a partial perspective view of a second child's seating equipment embodying the invention, the equipment incorporating a connector strap and clamp device for the shoulder belt of an associated 3-point adult seat belt system;

Figure 6 is a perspective view of the clamp device of Figure 5; and

Figure 7 is a sectional side view of the clamp device of Figure 6.

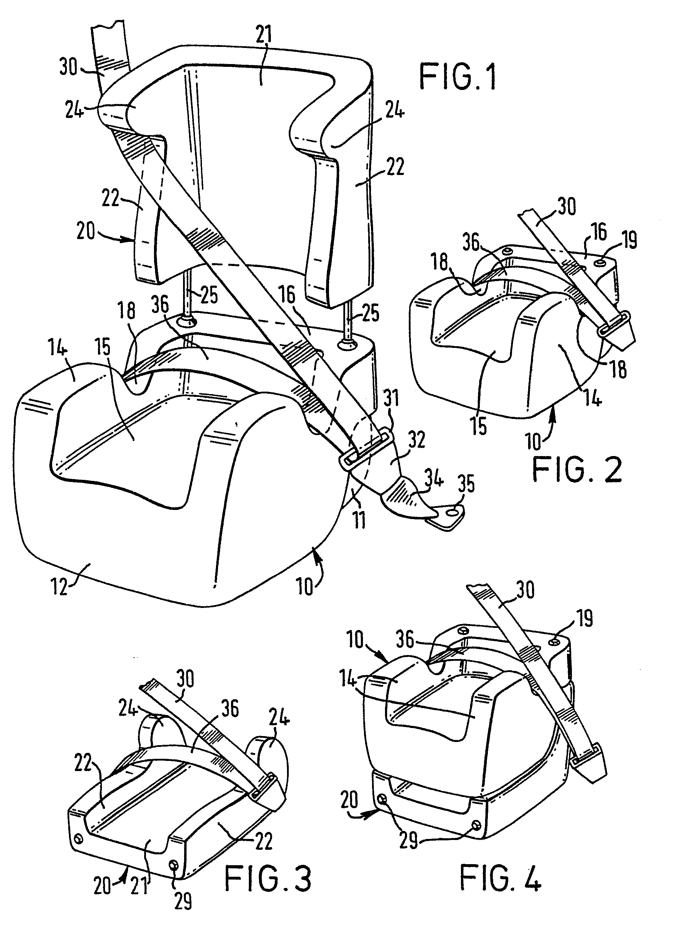

The first child's seating equipment as shown in Figure 1 comprises a base or seat portion 10 having a back portion 20 superimposed upon it. The seat portion 10 comprises a generally rectangular slab 12 having a wall 14 extending upwardly from its top surface 15 along each longer side and merging with a wall 16 along one shorter side, which is to the rear of the seat in use. A recess 18 extending downwardly towards the surface 15 is provided in each side wall 14 and extends across it at a position towards the rear wall 16. The top surface 15 bounded on three sides by the rear and side walls 14,16 may be flat or suitably contoured to provide a comfortable seating surface.

The back portion 20 is generally channel-shaped, having a centre wall 21 and two side walls 22 extending generally upright in the illustrated position of use.

Each side wall 22 is provided with a forwardly extending projection 24 at its upper end. At least at its lower end, which is flat, the back portion 20 corresponds in shape at least approximately to the shape of the flat upper surfaces of the rear and side walls of the seat portion 10, as far as the side walls extend from the rear wall to the rear wall to the recesses 18. The seat and back portions 10 and 20 thus have a unitary appearance when assembled together with the lower end of the back portion in abutment with the upper surfaces of the seat portion rear and side walls.

The abutting surfaces of the seat and back portions 10,20 are advantageously shaped to resist lateral displacement and/or fastener or locating means are provided to releasably secure the portions together. In the equipment of Figure 1, generally vertically extending holes 19 are provided at the corners between the side and centre walls 14,16 of the seat portion 10, for the reception of dowels 25 of greater length than the depth of the holes, so as to have portions projecting upwardly for reception in appropriately spaced holes 29 in the lower surface of the backrest portion. Assembly is readily effected by placing the dowels 25 in the seat portion holes 19, and by sliding the backrest portion 20 down on to them. Figure 1 shows an intermediate stage of assembly.

The seating equipment of Figure 1 is intended normally to be used on the rear seat of a passenger vehicle and can be provided with any suitable means whereby it can be held securely in place on the vehicle seat. Preferably however the equipment is held in place by an adult seat belt system associated with the vehicle seat, for example the illustrated conventional 3-point adult's seat belt system which comprises a shoulder or diagonal belt 30 extending diagonally downwards from an upper vehicle anchorage (not shown) to a loop of a buckle portion 31 releasably fastened to a co-operating buckle portion 32 connected by a short end 34 to a vehicle floor anchorage 35. Extending from the buckle portion 31 to a third vehicle anchorage on the same side of the seat as the first, is a lap belt 36.

It will be seen from Figure 1 that the projections 24 serve to redirect the run of the diagonal belt 30, so that this is correctly located in relation to the torso of the user, so as to be comfortable and to resist any tendency of the user to slide forwardly beneath it in the event of a sudden deceleration of the vehicle. In spite of the seat portion 10, the user's shoulders will normally be lower than those of an adult occupying the vehicle seat, and such repositioning of the diagonal belt 30 is very desirable. The lap belt 36 is located by the seat portion side wall recesses 18 to extend across the lap of the occupant. Consequently, the occupant is securely restrained within the child's seat which is itself securely located on the vehicle seat. If desired, the child's seat can be provided with a harness or the like for additional restraint of the seat occupant.

As shown in Figure 2, the seat portion 10 of the illustrated seating equipment may be used independently of the back portion 20, where the back support and lateral restraint provided by the back portion is not required. Again, the seat portion side wall recesses 18 guide the lap belt 36 whilst the diagonal belt portion 30 extends across the chest of the occupant, so both occupant and seat portion, acting now as a booster cushion, are safely restrained.

As appears from Figure 3, the back portion 20 also can be used independently as a booster cushion. Here, the side wall projections 24 serve as abutments against which the lap belt 36 can engage, so that the back portion is held securely on the vehicle seat whilst the diagonal belt portion functions as before. The centre wall 21 of the back portion, of which the inner surface now functions as a seating surface, will normally be of lesser thickness than the base of the seat portion slab 12, so an occupant of the backrest portion in use as shown in Figure 3 will not be so far raised above the vehicle seat as much as would an occupant of the seat portion 10.

The back and seat portions 10,20 can be assembled together also in stacking relationship, preferably, as shown in Figure 4, with the seat portion in its normal orientation but on top of the back portion which is in the orientation shown in Figure 3. The high level booster cushion thus obtained is retained on the vehicle seat by engagement of the lap belt 36 in the seating portion side wall recesses 18, as with Figures 1 and 2. The seat and back portions are preferably co-operatively shaped to ensure that the back portion 20 cannot slide forwardly from beneath the seat portion 10 under emergency conditions, and also so as to facilitate stacking. Accordingly, the lower rear corners of the seat portion 10 are recessed at 11 to receive the projections 24 of the backrest portion side walls.

The seat and back portions 10,20 can be integrally moulded in plastics foam material, which may be covered by appropriate fabric or sheet material. A resilient foam inset can be provided to form the upper or seating surface 15 of the seat portion 10 and a like inset for the wall 21 if desired can provide the backrest surface of the back portion 20.

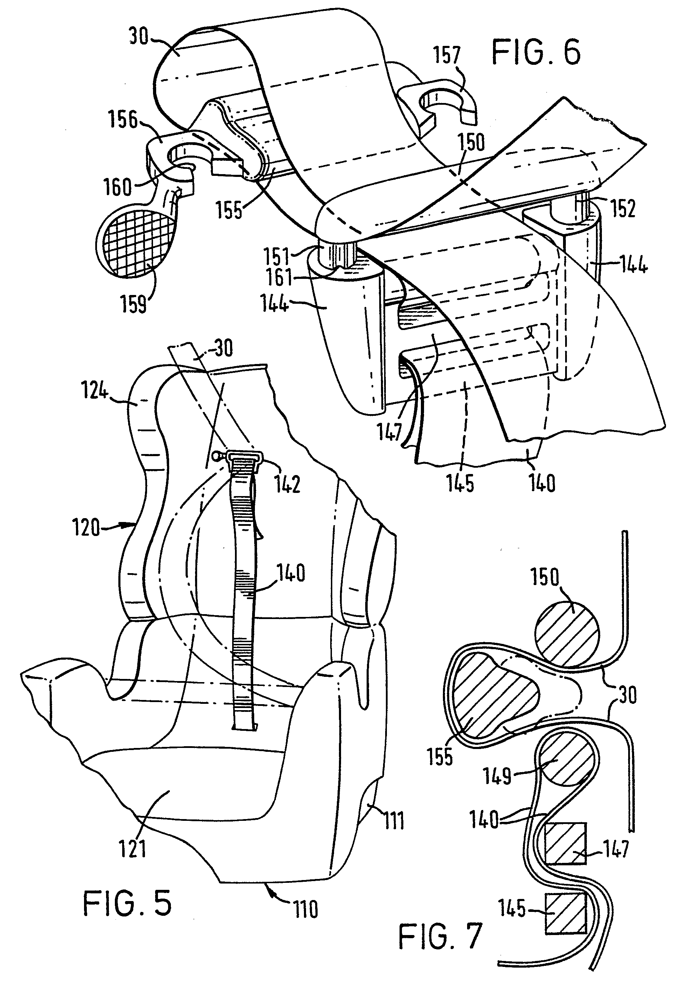

The child's seating equipment shown in Figures 5-7 comprises seat and back portions 110 and 120 corresponding generally in construction, shape and function to the seat and back portions 10 and 20. However, a connector strap 140 carrying a clamping device 142 (shown in detail in Figures 6 and 7) for releasable clamping connection with the diagonal belt 30, extends from the front of the backrest surface of the seat, formed by the walls 116 and 121, centrally and at a suitable height above the seating surface 115. In the seating equipment illustrated, the strap 140 extends from the front of seat portion rear wall 116.

The clamp device 142 comprises two side members 144 joined by transverse spaced parallel bars 145,147 and 149 of which the two bars 145 and 147, lowermost in position of use, are of square or rectangular cross-section. The bar 149 above them is of circular cross-section and constitutes the lower one of a pair of spaced parallel clamping bars of which the upper clamping bar 150, also of circular cross-section, is mounted above the ends of side members 144 by posts 151, 152 extending upwardly from them.

Releasably connectable to the posts 151,152 is a movable clamping bar 155 of generally pear-shaped cross-section, carried on a flat plate which protrudes from its ends to provide securement portions 154,157, each provided with a recess at the edge thereof adjacent the narrower rounded edge of the bar 155. To facilitate connection to and release from the posts 151,152, the securement portions 156 has an extension 159 provided with a finger grip. This securement portion 156 is provided with a projection 160 at one side of the recess which can be received in a longitudinal groove 161 in the associated post 151 in the assembled position of the clamp device.

The clamp device 142 is preferably secured to the connector strap 140 for selective adjustment of the effective length of the strap. The strap 140 thus extends upwardly from its connection to the seat portion 110 to the front of the lowermost bar 145 (to the right as shown in Figure 7), rearwardly between this and the bar 147, upwardly to the front of the clamping bar 149, over this, and then downwardly and forwardly between this and the lower bars 145 and 147. By relaxing any tension applied by the strap 140 to the clamp device, this can be moved along the strap by pulling on the portion connecting the upper securement bar, and then rearwardly and downwardly to the seat portion or the free end. On resumption of tension in the strap, the clamp device 142 is securely gripped by the strap at a desired position above the seating surface 115 of the seat portion 10.

With the clamp device 142 thus located at a suitable position just above one shoulder of the occupant, and the movable clamping bar 155 spaced from the bars 149,150, either by pivotation on the post 152, or as shown by complete separation, the diagonal belt 30 is formed in a loop which is pushed rearwardly between the two clamp bars. The movable clamping bar 155 is placed within the loop and then moved to its closed position, indicated by dotted line in Figure 7, in which the diagonal belt 30 is clamped between the clamping bar 150 and the movable clamp bar 155, and between the latter and the connector strap 140 extending around the lower clamping bar 149. The connector strap 140 is thereby additionally secured to the clamp device 142. These clamping actions are enhanced by tension in the diagonal belt 30, normally supplied by the tension of a rewind spring in a retractor from which the belt is withdrawn. The clamping action of the device 142 not only locates the part of the diagonal belt which extends across the chest of the user in a correct position, but also relieves the application of the retractor rewind spring tension on the user's chest.

Because the connector strap 140 and the clamp device 142 can be employed to correctly position the shoulder belt 30, the projections 124 of the back portion 120, corresponding otherwise to the projections 24 of the back portion 20, need not be shaped to effect this repositioning.   The projections 124 however again serve to engage the lap belt 36 when the back portion 120 is used in the manner shown in Figure 3 for the back portion 20, and co-operate with recesses 111 in the seat portion 100 when the portions are stacked in the manner shown in Figure 4 for the portions 10 and 20.

It will be evident that the connector strap 140 and clamp device 142 can function in the same way as has been described when the seat portion to which they are fitted is used alone as a booster cushion or uppermost in the stacked position.   Conveniently, each of the seat and back portions can be provided with means for releasable securement thereto of the connector strap. Each portion can thus be apertured, and the end of the strap remote from the clamp device can be arranged to be releasably connected to a retaining plate by which the strap is prevented from being pulled forwardly out of engagement with the portion.

It will be apparent that the invention can be embodied in a variety of ways other than as specifically described and as shown in the drawings.

-11-

CLAIMS

1. Seating equipment for child use in association with a vehicle seat, the equipment comprising a first portion (10;110) providing in use a seating surface above that of the vehicle seat, and a second portion (20;120) which can be releasably connected to the first portion to provide a backrest surface.

2. Seating equipment as claimed in claim 1 wherein the first and second portions (10;110 & 20;120) are arranged to be stacked one upon the other on a vehicle seat, with the seating or backrest surface of the uppermost of the portions positioned for use as a seating surface.

3. Seating equipment for child use in association with a vehicle seat, the equipment comprising first and second portions (10;110 & 20;120) arranged to be selectively stacked one upon the other to provide a seating surface at predetermined heights above that of the vehicle seat.

4. Seating equipment as claimed in claim 3 wherein the portions are arranged to be releasably assembled together with one portion (20;120) providing a backrest surface for a child sitting on the other portion (10:110).

5. Seating equipment as claimed in any preceding claim wherein each of the first and second portions (10;110 & 20;121) is arranged for use with a vehicle seat independently of the other portion to provide a seating surface above that of the seat.

6. Seating equipment as claimed in any preceding claim wherein at least one of the portions has means (24;140,142) for engaging the shoulder belt (30) of a seat belt system associated with the vehicle seat so that the shoulder belt extends across the chest of an occupant of the equipment from a position above and adjacent one shoulder of the occupant.

7. Seating equipment as claimed in claim 6 wherein the means for engaging the shoulder belt comprises a connector (142) for receiving the shoulder belt (30), the connector being carried by a connector strap (140) extending from the portion.

8. Seating equipment as claimed in claim 1 or 4 wherein the portion (20) positioned to provide a backrest surface has a portion (24) projecting forwardly of the backrest surface under which can be received the shoulder belt (30) of a seat belt system associated with the vehicle seat.

9. Seating equipment for child use in association with a vehicle seat, the seating equipment providing a backrest surface and means (24) adjacent the backrest surface for engagement with the shoulder belt (30) of a seat belt system associated with the vehicle seat to position the belt appropriately to the occupant of the seating equipment.

10. Seating equipment for child use in association with a vehicle seat, the seating equipment having extending to the front thereof a strap (140) carrying a connector (142) for clampingly engaging the shoulder belt (30) of a seat belt system associated with the vehicle seat to position the belt appropriately to the occupant of the seating equipment.

FIG.1

FIG. 2

FIG.3

FIG. 4

0155784

FIG. 6

FIG. 5

FIG. 7